# EUROPEAN PATENT APPLICATION

(11) **EP 4 847 578 A1**
(43) Date of publication of application: **02.12.2026**
(21) Application number: 26181812.4
(22) Date of filing: 29.05.2026
(51) Int. Cl.: C09K 3/10, C09D 5/34

(54) **COLOR CHANGING SEALANT COMPOSITIONS**

(30) Priority: 29.05.2025 US 202563814084 P
(71) Applicant: DAP Global Inc., Baltimore, MD 21224 (US)
(72) Inventor: Hughes, John E., Pennsylvania, 19352 (US)
(74) Representative: Eisenführ Speiser

(57) **Abstract**

Described herein are color changing sealant compositions. The sealant compositions include a sealant binder composition, a color change indicator, and optionally a pH buffer. The sealant compositions are useful in a variety of building and construction applications, as well as interior or exterior trim work applications.

## Description

### CROSS-REFERENCE TO RELATED APPLICATIONS

This application claims priority to U.S. Provisional Patent Application No. 63/814084, filed May 29, 2025, the contents of which are hereby incorporated by reference herein.

### FIELD OF DISCLOSURE

This disclosure is directed to color changing sealant compositions. The sealant compositions include a sealant binder composition, a color change indicator, and optionally a pH buffer. The sealant compositions are useful in a variety of building and construction applications, as well as interior or exterior trim work applications.

### BACKGROUND

Color changing sealant compositions are known in the art. However, conventional color changing sealant compositions possess undesirable pH ranges, processing conditions, storage conditions, and/or physical properties.

Regardless, color changing sealant compositions are desirable. Such compositions indicate when the sealant has cured, for exposure to water, by using a color indicator chemical.

Accordingly, there is a need in the art for improved color changing sealant compositions.

### BRIEF DESCRIPTION OF THE DISCLOSURE

In one aspect, provided herein is a sealant composition comprising: a sealant binder composition, a color change indicator, and optionally a pH buffer.

In another aspect, provided herein is a method of making a sealant composition comprising: a sealant binder composition, a color change indicator, and optionally a pH buffer. The method comprises forming a mixture comprising the sealant binder composition, the color change indicator, and optionally the pH buffer, and mixing the mixture.

In yet another aspect, provided herein is a method of using a sealant composition comprising: a sealant binder composition, a color change indicator, and optionally a pH buffer. The method comprises applying the sealant composition to a work surface.

### DETAILED DESCRIPTION OF THE DISCLOSURE

Sealant compositions in accordance with the present disclosure are color changing. The present compositions include a combination of a sealant binder composition, a color change indicator, and optionally a pH buffer that is sufficient to provide the desired properties.

In some embodiments, the sealant binder composition comprises a sealant polymer. As used herein a "sealant polymer" is a polymer that is useful as a sealant. In some embodiments, the sealant binder composition comprises one sealant polymer. In some embodiments, the sealant binder composition comprises at least two sealant polymers. In some embodiments, the sealant binder composition comprises three or more sealant polymers. In some embodiments, the sealant binder composition comprises a sealant polymer in the form of a polymer emulsion.

In some embodiments, the sealant binder composition comprises a latex sealant binder. In some embodiments, the sealant binder composition comprises a high solids acrylic latex polymer. In some embodiments, the sealant binder composition comprises a high solids acrylic latex polymer emulsion. In some embodiments, the sealant binder composition comprises a binder selected from the group consisting of acrylic emulsions, styrene-acrylic co-polymer emulsions, acrylic emulsions with high solids content, polyurethane dispersions, polyurethane dispersions with high solids content, and combinations thereof.

Generally, the color change indicator may comprise any suitable color change indicator known in the art. As used herein, a color change indicator results in a color change of the sealant composition upon drying.

In some embodiments, the color change indicator comprises only one color change indicator. In these embodiments, the sealant composition changes color from a first color (e.g., pink) to a second color (e.g., white) upon drying. When the sealant composition is the second color, it is paintable and water-ready.

In some embodiments, the color change indicator comprises at least two color change indicators. In these embodiments, the sealant composition changes color from a first color (e.g., purple) to a second color (e.g., pink) and then from the second color to a third color (e.g., white) upon drying. When the sealant composition is the second color, it is paintable but not water-ready. When the sealant composition is the third color, it is paintable and water-ready.

In some embodiments, the color change indicator comprises more than two color change indicators.

In some embodiments, the color change indicator is selected from the group consisting of pH indicators, phenolphthalein, thymolphthalein, cresolphthalein (ortho), and combinations thereof.

Generally, the pH buffer may comprise any suitable pH buffer known in the art. As used herein, a pH buffer maintains the pH of the sealant composition in a particular range before drying. The pH buffer is compatible with the chemical being buffered. In some embodiments, the pH buffer is selected from the group consisting of phosphate buffers, sulfate buffers, carboxylate buffers, and combinations thereof

In some embodiments, the sealant composition has a pH in a range of from about 9.5 to about 13.5. As described herein, these pH values are for the sealant composition before drying. Generally, the pH decreases upon drying. The dry pH may be within this range or below this range.

In some embodiments, the sealant composition has a pH of at least about 9.5, at least about 10.0, at least about 10.5, at least about 11.0, at least about 11.5, at least about 12.0, at least about 12.5, or at least about 13.0.

In some embodiments, the sealant composition has a pH of at most about 10.0, at most about 10.5, at most about 11.0, at most about 11.5, at most about 12.0, at most about 12.5, at most about 13.0, or at most about 13.5.

Generally, the sealant composition may comprise any suitable sealant composition auxiliary component known in the art. In some embodiments, the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.

In some embodiments, the sealant composition further comprises a blend comprising pigments and/or fillers.

In some embodiments, the sealant composition further comprises a blend comprising pigments and/or fillers, wherein the blend has a refractive index of at least 1.70. In these embodiments, the relatively high refractive index ensures a timely color change to white at the surface of the sealant.

In some embodiments, the sealant composition comprises a solvent. In some embodiments, the solvent improves low temperature exposure. In some embodiments, the solvent is an antifreeze agent. In some embodiments, the sealant composition comprises a solvent selected from the group consisting of diethylene glycol ethyl ether, diethylene glycol monobutyl ether (butyl carbitol), ethylene glycol butyl ether (butyl cellosolve), di-propylene glycol methyl ether, propylene glycol methyl ether, propylene glycol propyl ether, di-propylene glycol n-butyl ether, acetates thereof, ethylene glycol, propylene glycol, 2,2,4-trimethyl-1,3pentanediolmonoisobutyrate, and combinations thereof.

In some embodiments, the sealant composition comprises a solvent medium. In some embodiments, the solvent medium comprises water such that the sealant composition is water-based. In some embodiments, the sealant composition comprises water.

In some embodiments, the sealant composition is oil-based. In some embodiments, the sealant composition comprises oil.

In some embodiments, the sealant composition comprises an open time extender. The open time extender allows the film to remain open longer, thereby providing better through-cure.

In some embodiments, the sealant composition is prepared according to a method comprising (i) forming a mixture comprising the sealant binder composition, the color change indicator, and optionally the pH buffer, and (ii) mixing the mixture.

In some embodiments, the sealant composition is used according to a method comprising applying the sealant composition to a work surface.

Generally, the sealant composition may be applied to the work surface using any suitable tool known in the art. In some embodiments, the sealant composition is applied to the work surface with a tool selected from the group consisting of caulk guns, pumping tools, squeeze tubes, squeeze bottles, and combinations thereof.

In some embodiments, the work surface is selected from the group consisting of a surface in a building and/or construction application, a surface in an interior trim work application, a wall, a floor, a ceiling, a door, a window, a gap therebetween, and combinations thereof.

In some embodiments, the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.

Embodiments of the present disclosure include:
Embodiment 1. A sealant composition comprising:
   a sealant binder composition;
   a color change indicator; and
   optionally a pH buffer.
Embodiment 2. The sealant composition of the preceding embodiment, wherein the sealant binder composition comprises a component selected from the group consisting of latex polymers, plasticizers, acrylic emulsions, styrene-acrylic co-polymer emulsions, acrylic emulsions with high solids content, polyurethane dispersions, polyurethane dispersions with high solids content, and combinations thereof.
Embodiment 3. The sealant composition of any preceding embodiment, wherein the color change indicator is selected from the group consisting of pH indicators, phenolphthalein, thymolphthalein, cresolphthalein (ortho), and combinations thereof.
Embodiment 4. The sealant composition of any preceding embodiment, wherein the pH buffer is selected from the group consisting of phosphate buffers, sulfate buffers, carboxylate buffers, and combinations thereof.
Embodiment 5. The sealant composition of any preceding embodiment, wherein the sealant composition has a pH in a range of from about 9.5 to about 13.5.
Embodiment 6. The sealant composition of any preceding embodiment, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.
Embodiment 7. The sealant composition of any preceding embodiment, wherein the sealant composition is configured to change color upon drying.
Embodiment 8. The sealant composition of any preceding embodiment, wherein the sealant composition further comprises a blend comprising pigments and/or fillers, wherein the blend has a refractive index of at least 1.70.
Embodiment 9. A method of making a sealant composition comprising:
   a sealant binder composition;
   a color change indicator; and
   optionally a pH buffer,
   wherein the method comprises:
   forming a mixture comprising the sealant binder composition, the color change indicator, and optionally the pH buffer; and
   mixing the mixture.
Embodiment 10. The method of the preceding embodiment, wherein the color change indicator is selected from the group consisting of pH indicators, phenolphthalein, thymolphthalein, cresolphthalein (ortho), and combinations thereof.
Embodiment 11. The method of any preceding embodiment, wherein the pH buffer is selected from the group consisting of phosphate buffers, sulfate buffers, carboxylate buffers, and combinations thereof.
Embodiment 12. The method of any preceding embodiment, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.
Embodiment 13. The method of any preceding embodiment, wherein the sealant composition further comprises a blend comprising pigments and/or fillers, wherein the blend has a refractive index of at least 1.70.
Embodiment 14. A method of using a sealant composition comprising:
   a sealant binder composition;
   a color change indicator; and
   optionally a pH buffer,
   wherein the method comprises applying the sealant composition to a work surface.
Embodiment 15. The method of the preceding embodiment, wherein the work surface is selected from the group consisting of a surface in a building and/or construction application, a surface in an interior trim work application, a wall, a floor, a ceiling, a door, a window, a gap therebetween, and combinations thereof.
Embodiment 16. The method of any preceding embodiment, wherein the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.
Embodiment 17. The method of any preceding embodiment, wherein the color change indicator is selected from the group consisting of pH indicators, phenolphthalein, thymolphthalein, cresolphthalein (ortho), and combinations thereof.
Embodiment 18. The method of any preceding embodiment, wherein the pH buffer is selected from the group consisting of phosphate buffers, sulfate buffers, carboxylate buffers, and combinations thereof.
Embodiment 19. The method of any preceding embodiment, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.
Embodiment 20. The method of any preceding embodiment, wherein the sealant composition has a pH in a range of from about 9.5 to about 13.5 before drying.
Embodiment 21. The method of any preceding embodiment, wherein the sealant composition exhibits a color change upon drying.
Embodiment 22. The method of any preceding embodiment, wherein the sealant composition is applied to the work surface with a tool selected from the group consisting of caulk guns, pumping tools, squeeze tubes, squeeze bottles, and combinations thereof.
Embodiment 23. The method of any preceding embodiment, wherein the sealant composition further comprises a blend comprising pigments and/or fillers, wherein the blend has a refractive index of at least 1.70.

### EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever.

### Example 1. Inventive Compositions.

The following compositions are exemplary inventive compositions in accordance with the present disclosure.

**Table 1. Exemplary inventive composition A. A color changing sealant without a pH buffer. This composition has a pH of 11.06 and a density of 11.56 lbs/gal.**

| Component Description | Amount (wt%) |
|---|---|
| Binder | 42.49 |
| Plasticizer | 3.28 |
| Solvent for improving low temperature exposure | 0.30 |
| Wetting agent | 0.42 |
| Dispersant | 0.83 |
| Open time extender | 0.51 |
| Silane adhesion promoter | 0.05 |
| Biocide | 0.14 |
| Color changing indicator | 0.01 |
| Titanium dioxide pigment | 0.61 |
| Calcium carbonate filler | 49.76 |
| Thickener | 0.73 |
| Solvent medium | 0.29 |
| pH adjuster | 0.58 |

This formulation includes one color changing indicator such that it changes color from pink to white upon drying. This color change occurs at a pH of between 10.6-11.0.

**Table 2. Exemplary inventive composition B. A color changing sealant with a pH buffer. This composition has a pH of 11.81 and a density of 11.72 lbs/gal.**

| Component Description | Amount (wt%) |
|---|---|
| Binder | 42.41 |
| Plasticizer | 3.27 |
| Solvent for improving low temperature exposure | 0.30 |
| Wetting agent | 0.42 |
| Dispersant | 0.83 |
| Open time extender | 0.51 |
| Silane adhesion promoter | 0.05 |
| Buffer | 0.10 |
| Biocide | 0.14 |
| Color changing indicator | 0.01 |
| Titanium dioxide pigment | 0.61 |
| Calcium carbonate filler | 49.67 |
| Thickener | 0.56 |
| Solvent medium | 0.29 |
| pH adjuster | 0.81 |

This formulation includes one color changing indicator such that it changes color from pink to white upon drying. This color change occurs at a pH of between 10.6-11.0.

**Table 3. Exemplary inventive composition C. A color changing sealant with two color changing indicators. This composition has a pH of 12.49.**

| Component Description | Amount (wt%) |
|---|---|
| Binder | 42.11 |
| Plasticizer | 3.24 |
| Solvent for improving low temperature exposure | 0.30 |
| Wetting agent | 0.42 |
| Dispersant | 0.82 |
| Open time extender | 0.50 |
| Silane adhesion promoter | 0.05 |
| Buffer | 0.05 |
| Color changing indicator 1 | 0.01 |
| Color changing indicator 2 | 0.0008 |
| Titanium dioxide pigment | 0.60 |
| Calcium carbonate filler | 49.31 |
| Thickener | 0.56 |
| Solvent medium | 1.26 |
| pH adjuster | 0.75 |

This formulation includes two color changing indicators such that it changes color upon drying from purple to pink at pH 11.5 and then turns white at pH 10.5.

### Example 2. Refractive Index.

In some embodiments, the sealant composition includes a blend including pigments and/or fillers. In some embodiments, improved results are observed when the refractive index (RI) of the blend including pigments and/or fillers is at least 1.70. In these embodiments, the relatively high refractive index ensures a timely color change to white at the surface of the sealant.

The refractive index may be theoretically calculated by the below method: $\begin{matrix}Overall RI of blend \\ = \left(\left(% wt pigment\right)∗\left(RI of pigment\right)\right) \\ + \left(\left(% wt filler\right)∗\left(RI of filler\right)\right)\end{matrix}$

Notably, % wt indicates the weight percent of that pigment or filler in the blend, but not the weight percent of that pigment or filler in the overall formulation.

The below table shows a comparison between the RI values, as calculated above, of comparative examples and an inventive example according to the present disclosure. The RI of TiO₂ is 2.71 and the RI of CaCO₃ is 1.57.

**Table 4. RI comparison between comparative examples and inventive examples according to the present disclosure.**

| Formulation | Amount TiO₂ in Blend (wt%) | Amount CaCO₃ in Blend (wt%) | Blend RI |
|---|---|---|---|
| Comparative Composition A | 2.93 | 97.07 | 1.603 |
| Comparative Composition B | 2.355 | 97.645 | 1.597 |
| Comparative Composition C | 11.344 | 88.656 | 1.699 |
| Exemplary Inventive Composition D | 14.074 | 85.926 | 1.730 |

Upon testing, it was found that the formulations with a blend RI of less than 1.70, including Comparative Compositions A-C, have opacity issues and do not turn white within a defined time period of 8-12 hours. For example, after 17 hours, Comparative Composition C still had a slight pink undertone to the color on drawdown. The A value (i.e., the color measurement that measures the red/green value) was equal to Comparative Composition B.

In contrast, formulations with a blend RI of at least 1.70, including Exemplary Inventive Composition D, do not have opacity issues and fully change to white within the required 8-12 hour window. It was therefore found that a blend RI of at least 1.70 is necessary to achieve formulations that turn white within a defined time period of 8-12 hours.

### Conclusions.

Disclosed herein is a color changing sealant composition that provides the ability to determine when the composition is water-ready by use of a color indicator. The composition is stable for long periods.

This written description uses examples to illustrate the present disclosure, including the best mode, and also to enable any person skilled in the art to practice the disclosure, including making and using any compositions or systems and performing any incorporated methods. The patentable scope of the disclosure is defined by the claims, and may include other examples that occur to those skilled in the art. Such other examples are intended to be within the scope of the claims if they have elements that do not differ from the literal language of the claims, or if they include equivalent elements with insubstantial differences from the literal language of the claims.

As used herein, the terms "comprises," "comprising," "includes," "including," "has," "having," "contains", "containing," "characterized by" or any other variation thereof, are intended to cover a non-exclusive inclusion, subject to any limitation explicitly indicated. For example, a composition, mixture, process or method that comprises a list of elements is not necessarily limited to only those elements but may include other elements not expressly listed or inherent to such composition, mixture, process or method.

The transitional phrase "consisting of" excludes any element, step, or ingredient not specified. If in the claim, such would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of' is used to define a composition or method that includes materials, steps, features, components, or elements, in addition to those literally disclosed, provided that these additional materials, steps, features, components, or elements do not materially affect the basic and novel characteristic(s) of the claimed invention. The term "consisting essentially of" occupies a middle ground between "comprising" and "consisting of".

Where an invention or a portion thereof is defined with an openended term such as "comprising," it should be readily understood that (unless otherwise stated) the description should be interpreted to also describe such an invention using the terms "consisting essentially of" or "consisting of."

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

As used herein, the term "about" means plus or minus 10% of the value.

## Claims

1. A sealant composition comprising:
a sealant binder composition;
a color change indicator; and
optionally a pH buffer.

2. The sealant composition of claim 1, wherein the sealant binder composition comprises a component selected from the group consisting of latex polymers, plasticizers, acrylic emulsions, styrene-acrylic co-polymer emulsions, acrylic emulsions with high solids content, polyurethane dispersions, polyurethane dispersions with high solids content, and combinations thereof.

3. The sealant composition of any one of the claims 1 to 2, wherein the color change indicator is selected from the group consisting of pH indicators, phenolphthalein, thymolphthalein, cresolphthalein (ortho), and combinations thereof.

4. The sealant composition of any one of the claims 1 to 3, wherein the pH buffer is selected from the group consisting of phosphate buffers, sulfate buffers, carboxylate buffers, and combinations thereof, and/or
wherein the sealant composition has a pH in a range of from about 9.5 to about 13.5.

5. The sealant composition of any one of the claims 1 to 4, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.

6. The sealant composition of any one of the claims 1 to 5, wherein the sealant composition further comprises a blend comprising pigments and/or fillers, wherein the blend has a refractive index of at least 1.70 and/or
wherein the sealant composition is configured to change color upon drying.

7. A method of making a sealant composition comprising:
a sealant binder composition;
a color change indicator; and
optionally a pH buffer,
wherein the method comprises:
forming a mixture comprising the sealant binder composition, the color change indicator, and optionally the pH buffer; and
mixing the mixture.

8. The method of claim 7, wherein the color change indicator is selected from the group consisting of pH indicators, phenolphthalein, thymolphthalein, cresolphthalein (ortho), and combinations thereof and/or
wherein the pH buffer is selected from the group consisting of phosphate buffers, sulfate buffers, carboxylate buffers, and combinations thereof.

9. The method of any one of the claims 7 to 8, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.

10. A method of using a sealant composition comprising:
a sealant binder composition;
a color change indicator; and
optionally a pH buffer,
wherein the method comprises applying the sealant composition to a work surface.

11. The method of claim 10, wherein the work surface is selected from the group consisting of a surface in a building and/or construction application, a surface in an interior trim work application, a wall, a floor, a ceiling, a door, a window, a gap therebetween, and combinations thereof and/or
wherein the work surface comprises a material selected from the group consisting of glass, ceramic tile, porcelain tile, ceramic and porcelain tile, concrete, metals, aluminum, plastic, polyvinyl chloride (PVC), acrylonitrile butadiene styrene (ABS), wood, drywall, and combinations thereof.

12. The method of any one of the claims 10 to 11, wherein the color change indicator is selected from the group consisting of pH indicators, phenolphthalein, thymolphthalein, cresolphthalein (ortho), and combinations thereof and/or
wherein the pH buffer is selected from the group consisting of phosphate buffers, sulfate buffers, carboxylate buffers, and combinations thereof.

13. The method of any one of the claims 10 to 12, wherein the sealant composition further comprises an auxiliary component selected from the group consisting of rheological additives, organic thickening agents, inorganic thickening agents, adhesion promoters, open time extenders, pigments, dispersants, pigment dispersants, filler dispersants, fillers, detergents, non-ionic detergents, cationic detergents, anionic detergents, surfactants, non-ionic surfactants, cationic surfactants, anionic surfactants, wetting agents, biocides, mildew growth inhibitors, plasticizers, oils, process oils, freeze-thaw additives, volatile freeze-thaw additives, non-volatile freeze-thaw additives, pH modifiers, volatile pH modifiers, non-volatile pH modifiers, buffers, coalescing agents, defoamers, stabilizers, deaerators, corrosion inhibitors, solvents, water, and combinations thereof.

14. The method of any one of the claims 10 to 13, wherein the sealant composition exhibits a color change upon drying.

15. The method of any one of the claims 10 to 14, wherein the sealant composition is applied to the work surface with a tool selected from the group consisting of caulk guns, pumping tools, squeeze tubes, squeeze bottles, and combinations thereof.
